# EUROPEAN PATENT APPLICATION

(11) **EP 4 571 243 A1**
(43) Date of publication of application: **18.06.2025**
(21) Application number: 23907727.4
(22) Date of filing: 20.12.2023
(51) Int. Cl.: G01B 11/02, G01B 11/14, H01M 10/04

(54) **APPARATUS FOR INSPECTING ELECTRODE ASSEMBLY AND BATTERY CELL COMPRISING ELECTRODE ASSEMBLY PRODUCED USING SAME, AND BATTERY PACK AND VEHICLE COMPRISING BATTERY CELLS**

(30) Priority: 20.12.2022 KR 20220179669; 19.12.2023 KR 20230186038
(71) Applicant: LG Energy Solution, Ltd., Seoul 07335 (KR)
(72) Inventor: KO, Hong-Jae, Daejeon 34122 (KR); KIM, Tae-Young, Daejeon 34122 (KR)
(74) Representative: Goddar, Heinz J.
(86) International application number: PCT/KR2023/021106
(87) International publication number: WO 2024/136444

(57) **Abstract**

Disclosed are an electrode assembly inspection device, a battery cell including an electrode assembly produced using the same, and a battery pack and a vehicle including the battery cell. An electrode assembly inspection device according to an embodiment of the present disclosure, which is a device for inspecting an electrode assembly of a battery cell, includes a winding roll where a negative electrode, a first separator, a positive electrode, and a second separator are wound; a first inspection unit spaced apart from the negative electrode and disposed to face at least one of a first end of the negative electrode and a second end of the negative electrode; a second inspection unit spaced apart from the positive electrode and disposed to face at least one of a first end of the positive electrode and a second end of the positive electrode; and a control unit determining whether the electrode assembly is defective based on the inspection result from at least one of the first inspection unit and the second inspection unit.

## Description

### TECHNICAL FIELD

The present application claims priority to Korean Patent Application No. 10-2022-0179669 filed on December 20, 2022 and Korean Patent Application No. 10-2023-0186038 filed on December 19, 2023 in the Republic of Korea, the disclosures of which are incorporated herein by reference.

The present disclosure relates to an electrode assembly inspection device, a battery cell including an electrode assembly produced using the same, and a battery pack and a vehicle including the battery cell, and more specifically, to an electrode assembly inspection device capable of inspecting whether the electrode assembly is meandering during the manufacturing thereof and whether the uncoated tab is folded, a battery cell including an electrode assembly produced using the same, and a battery pack and a vehicle including the battery cell.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit secondary battery cell is about 2.5 V to 4.5 V.

Therefore, when a higher output voltage is required, a plurality of battery cells may be connected in series to configure a battery module or a battery pack. In addition, depending on the demanded charge/discharge capacity, a plurality of battery cells may also be connected in parallel to configure a battery module or a battery pack. Thus, the number and electrical connection type of battery cells included in the battery module or the battery pack may be variously set depending on at least one of the required output voltage and the demanded charge/discharge capacity.

Meanwhile, cylindrical, prismatic, and pouch-type battery cells are known as types of secondary battery cells. In the case of a cylindrical battery cell, a separator, which is an insulator, is interposed between a positive electrode and a negative electrode and wound to form a jelly roll-shaped electrode assembly, which is then inserted into a battery can together with an electrolyte to form a battery. And, in the cylindrical battery cell, a current collector plate may be used to electrically connect the positive electrode plate and the negative electrode plate, respectively.

In the process of manufacturing the electrode assembly of a cylindrical battery cell, a negative electrode, a positive electrode, and a separator should be placed at a predetermined position, but during the manufacturing process, a meander may occur in which the negative electrode, the positive electrode, and the separator are not accurately aligned.

In the manufacturing process of this electrode assembly, depending on the widthwise tolerance of the coating portions of the negative electrode and the positive electrode and the alignment difference of the upper separator and the lower separator, a meander in one direction occurs and in severe cases, reversal may occur.

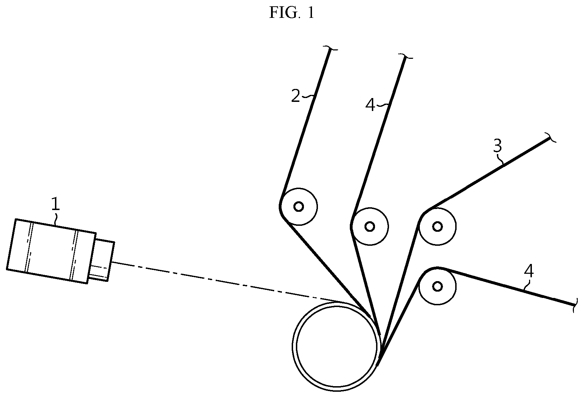

FIG. 1 is a view schematically showing a device for inspecting whether a negative electrode, a positive electrode, and a separator are meandering when manufacturing an electrode assembly of a conventional cylindrical battery cell.

Referring to FIG. 1, in order to inspect such a meander, conventional inspection was performed by viewing only one side of the electrode assembly using a single camera 1, and due to the equipment and winding process, both sides could not be inspected, so there was a risk of a meander caused by tolerances that could occur in the side opposite to the inspection side. That is, there is a problem of being unable to sufficiently and accurately inspect whether the negative electrode 2, the positive electrode 3, and the separator 4 are meandering.

In addition, when uncoated tabs are formed on the negative electrode and the positive electrode, the uncoated tabs may be folded during the manufacturing process of the electrode assembly, but in the prior art, there is a problem of being unable to inspect whether the uncoated tabs are folded.

Therefore, there is a need to develop a new electrode assembly winding meander inspection device and electrode assembly winding meander inspection method that may solve the problems described above.

### DISCLOSURE

### Technical Problem

The present disclosure is designed to solve the problems of the related art, and therefore the present disclosure is directed to providing an electrode assembly inspection device configured to inspect a meander due to the widthwise tolerance of the coating portion of an electrode, a battery cell including an electrode assembly produced using the same, and a battery pack and a vehicle including the battery cell.

In addition, in another aspect, the present disclosure is directed to providing an electrode assembly inspection device configured to inspect the meander due to the widthwise tolerance of the coating portion of an electrode through calculation between inspection data before winding and inspection data during winding in an area that cannot be inspected in the winding process of an electrode assembly, a battery cell including an electrode assembly produced using the same, and a battery pack and a vehicle including the battery cell.

In addition, the present disclosure is directed to providing an electrode assembly inspection device capable of accurately inspecting whether there is a defect between a negative electrode, a positive electrode, and a separator, a battery cell including an electrode assembly produced using the same, and a battery pack and a vehicle including the battery cell.

In addition, the present disclosure is directed to providing an electrode assembly inspection device capable of accurately inspecting whether an uncoated tab is folded when the uncoated tab is formed on a negative electrode or a positive electrode, a battery cell including an electrode assembly produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided an electrode assembly inspection device, which is a device for inspecting an electrode assembly of a battery cell, including a winding roll where a negative electrode, a first separator, a positive electrode, and a second separator are wound; a first inspection unit spaced apart from the negative electrode and disposed to face at least one of a first end of the negative electrode and a second end of the negative electrode; a second inspection unit spaced apart from the positive electrode and disposed to face at least one of a first end of the positive electrode and a second end of the positive electrode; and a control unit determining whether the electrode assembly is defective based on the inspection result from at least one of the first inspection unit and the second inspection unit.

In an embodiment, the first inspection unit may be disposed next to the negative electrode, and the second inspection unit may be disposed above the positive electrode.

In an embodiment, the first inspection unit and the second inspection unit may be disposed to be orthogonal to each other with respect to the winding roll.

In an embodiment, the first inspection unit may be disposed to face a part where the negative electrode is wound on the winding roll.

In an embodiment, the second inspection unit may be disposed to face a part where the positive electrode is wound on the winding roll.

In an embodiment, a negative electrode uncoated tab may be formed at the first end of the negative electrode, and the first inspection unit may include a first photographing member disposed to face the first end of the negative electrode to photograph the negative electrode uncoated tab.

In an embodiment, the control unit may determine whether the negative electrode uncoated tab is folded based on the result captured by the first photographing member.

In an embodiment, the first inspection unit may include a second photographing member disposed to face the second end of the negative electrode to photograph a gap between the negative electrode and the first separator.

In an embodiment, the second inspection unit may include a third photographing member disposed to face the first end of the positive electrode to photograph a gap between the positive electrode and the second separator.

In an embodiment, the third photographing member may photograph a gap between the first separator and the second separator.

In an embodiment, the positive electrode may be located inside the first separator and the second separator, and the first end of the positive electrode may be coated with a positive electrode active material.

In an embodiment, a positive electrode uncoated tab may be formed at the second end of the positive electrode, and the second inspection unit may include a fourth photographing member disposed to face the second end of the positive electrode to photograph the positive electrode uncoated tab.

In an embodiment, the control unit may determine whether the positive electrode uncoated tab is folded based on the result captured by the fourth photographing member.

In an embodiment, a negative electrode active material may be coated on both sides of the negative electrode and a positive electrode active material may be coated on both sides of the positive electrode, and the control unit may calculate whether the negative electrode or the positive electrode is meandering in the opposite direction based on the result of inspecting whether the negative electrode or the positive electrode is meandering in one direction.

In an embodiment, the control unit may store positive electrode measurement data of the widthwise length of the positive electrode active material coated on both sides of the positive electrode measured before winding, may derive a coating line on the rear side of the virtual positive electrode by calculating the positive electrode measurement data, may derive a coating line on the front side of the virtual positive electrode by calculating a meandering gap of the tab portion of the positive electrode, and may derive a meandering gap through the coating line on the rear side of the virtual positive electrode, the coating line on the front side of the virtual positive electrode and the end line on the front side of the negative electrode.

In an embodiment, the control unit may store negative electrode measurement data of the widthwise length of the negative electrode active material coated on both sides of the negative electrode measured before winding, may derive a coating line on the front side of the virtual negative electrode by calculating the negative electrode measurement data, may derive a coating line on the rear side of the virtual negative electrode by calculating a meandering gap of the tab portion of the negative electrode, and may derive a meandering gap through the coating line on the front side of the virtual negative electrode, the coating line on the rear side of the virtual negative electrode and the end line on the rear side of the positive electrode.

Meanwhile, according to another aspect of the present disclosure, there may be provided a battery cell including an electrode assembly produced using the electrode assembly inspection device described above, there may also be provided a battery pack including at least one battery cell described above, and there may also be provided a vehicle including at least one battery cell described above.

### Advantageous Effects

Embodiments of the present disclosure have the effect of inspecting a meander due to the widthwise tolerance of the coating portion of an electrode.

In addition, there is an effect of inspecting the meander due to the widthwise tolerance of the coating portion of an electrode through calculation between inspection data before winding and inspection data during winding in an area that cannot be inspected in the winding process of an electrode assembly.

In addition, there is an effect of accurately inspecting whether there is a defect between a negative electrode, a positive electrode, and a separator.

In addition, there is an effect of accurately inspecting whether an uncoated tab is folded when the uncoated tab is formed on a negative electrode or a positive electrode.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view schematically showing a device for inspecting whether a negative electrode, a positive electrode, and a separator are meandering when manufacturing an electrode assembly of a conventional cylindrical battery cell.
FIG. 2 is a schematic perspective view of an electrode assembly inspection device according to an embodiment of the present disclosure.
FIG. 3 is a view viewed along direction A of FIG. 2.
FIG. 4 is a view viewed along direction B of FIG. 2.
FIG. 5 is a view showing an image captured by a first inspection unit in an electrode assembly inspection device according to an embodiment of the present disclosure.
FIG. 6 is an enlarged view of part a of FIG. 5.
FIG. 7 is a view showing a case where folds occur in the negative electrode uncoated tab in FIG. 6.
FIG. 8 is an enlarged view of part b of FIG. 5.
FIG. 9 is a view showing an image captured by a second inspection unit in an electrode assembly inspection device according to an embodiment of the present disclosure.
FIG. 10 is an enlarged view of part c of FIG. 9.
FIG. 11 is a view showing a case where a gap is created between the first separator and the second separator in FIG. 10.
FIG. 12 is an enlarged view of part d of FIG. 9.
FIGS. 13 and 14 are views for describing, respectively, the calculation of whether a negative electrode or a positive electrode is meandering in the opposite direction based on the results of inspecting whether the negative electrode or the positive electrode is meandering in one direction by an electrode assembly inspection device according to an embodiment of the present disclosure.
FIG. 15 is a view schematically showing the configuration of a battery pack including a battery cell including an electrode assembly produced using an electrode assembly inspection device according to each embodiment of the present disclosure.
FIG. 16 is a view for describing a vehicle including the battery pack of FIG. 15.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

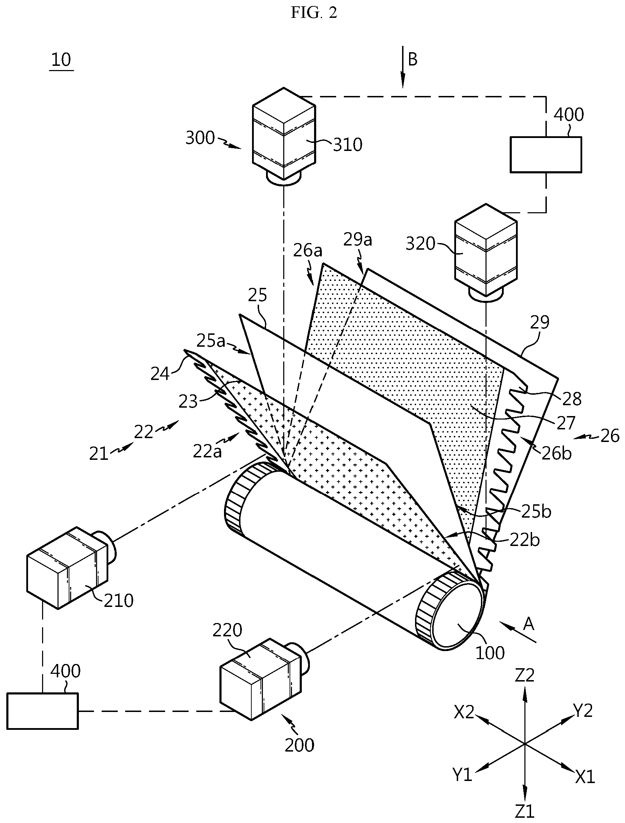

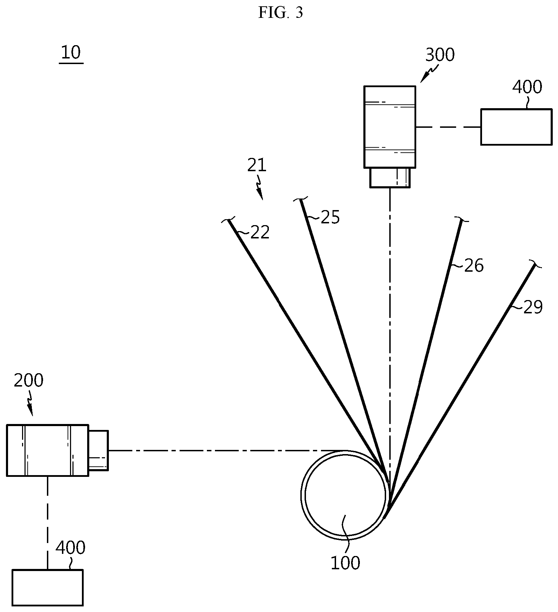

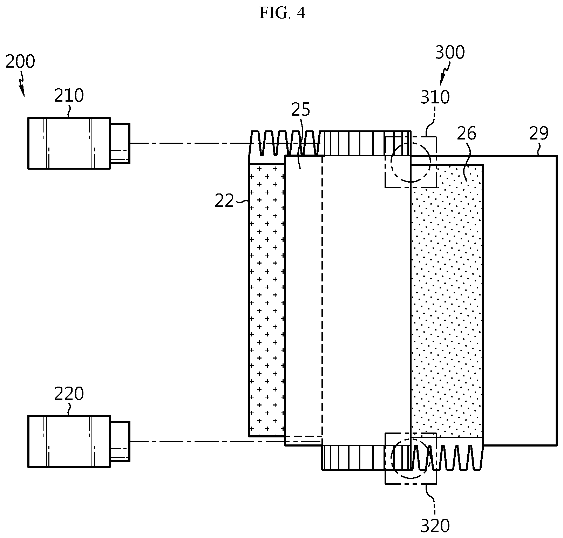

FIG. 2 is a schematic perspective view of an electrode assembly inspection device according to an embodiment of the present disclosure, FIG. 3 is a view viewed along direction A of FIG. 2, and FIG. 4 is a view viewed along direction B of FIG. 2.

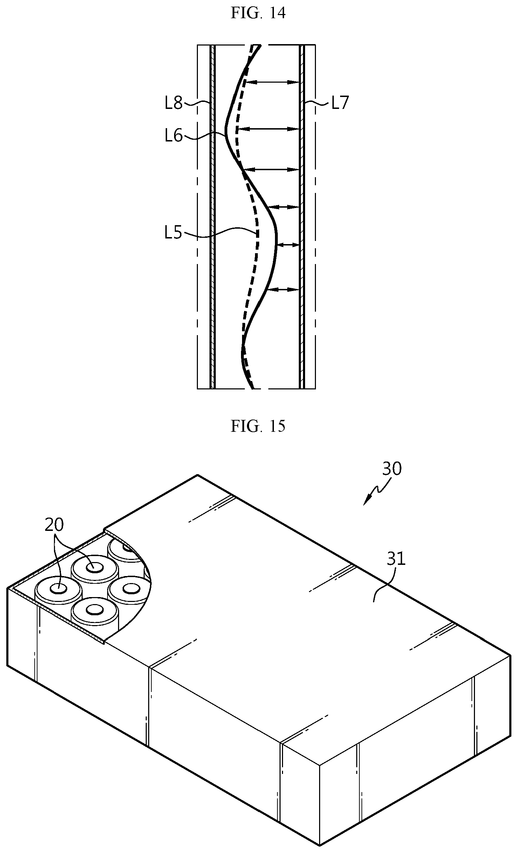

An electrode assembly inspection device 10 according to an embodiment of the present disclosure is a device for inspecting an electrode assembly 21 of a battery cell 20 when the electrode assembly 21 is wound. Specifically, referring to FIGS. 2 to 4, the electrode assembly inspection device 10 according to an embodiment of the present disclosure is a device capable of inspecting not only whether there is a meander between a negative electrode 22, a positive electrode 26, and separators 25, 29 in the manufacturing process of the electrode assembly 21 included in the battery cell 20 (e.g., the cylindrical battery cell of FIG. 15), but also whether a negative electrode uncoated tab 24 or a positive electrode uncoated tab 28 is folded when the uncoated tab is formed on the negative electrode 22 or the positive electrode 26.

The electrode assembly 21 has a structure in which the positive electrode 26, the negative electrode 22, and separators 25, 29 interposed between the positive electrode 26 and the negative electrode 22 are wound in one direction. And, a center hole is formed in the center of the electrode assembly 21 and the electrode assembly may be formed in a jelly roll type.

For example, referring to FIGS. 2 to 4, the electrode assembly 21 may be manufactured by winding a laminate formed by sequentially stacking the negative electrode 22, the first separator 25, the positive electrode 26, and the second separator 29 at least once. Here, the positive electrode 26 and the negative electrode 22 may be formed in a sheet shape.

That is, the electrode assembly 21 applied to this embodiment may be a winding type electrode assembly. In this case, an additional separator (not shown) may also be provided on the outer circumferential surface of the electrode assembly 21 for insulation from the battery can. That is, the electrode assembly 21 may have a winding structure well known in the related art without limitation.

A positive electrode active material 27 may be applied to one or both sides of the positive electrode 26, and the positive electrode uncoated tab 28 to which the positive electrode active material 27 is not applied may be formed at an end of the positive electrode 26. The positive electrode uncoated tab 28 is exposed to the outside of the separator while forming a plurality of winding turns around the center of the electrode assembly 21, and may itself be used as an electrode tab. However, the positive electrode uncoated tab 28 may not be formed on the positive electrode 26.

A negative electrode active material 23 may be applied to one or both sides of the negative electrode 22, and the negative electrode uncoated tab 24 to which the negative electrode active material 23 is not applied may be formed at an end of the negative electrode 22. The negative electrode uncoated tab 24 is exposed to the outside of the separator while forming a plurality of winding turns around the center of the electrode assembly 21, and may itself be used as an electrode tab. However, the negative electrode uncoated tab 24 may not be formed on the negative electrode 22.

Here, when the positive electrode 26 and the negative electrode 22 each include an uncoated portion, the positive electrode uncoated tab 28 and the negative electrode uncoated tab 24 may be configured to face opposite directions.

And, the positive electrode active material 27 coated on the positive electrode 26 and the negative electrode active material 23 coated on the negative electrode 22 may be used without limitation so long as they are active materials known in the art.

The separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof.

As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. In addition, the separator itself may be formed of a coating layer of inorganic particles. The particles constituting the coating layer may have a structure coupled to a binder so that an interstitial volume exists between adjacent particles.

Referring to FIGS. 2 to 4, the electrode assembly inspection device 10 according to an embodiment of the present disclosure may be configured to include a winding roll 100, a first inspection unit 200, a second inspection unit 300, and a control unit 400.

The negative electrode 22, the first separator 25, the positive electrode 26, and the second separator 29 are wound on the winding roll 100. Referring to FIG. 2, the negative electrode 22 is disposed in front (Y1 direction in FIG. 2) with respect to FIG. 2, the first separator 25 is disposed between the negative electrode 22 and the positive electrode 26, and the second separator 29 is disposed behind the positive electrode 26 (Y2 direction in FIG. 2). However, the arrangement of the negative electrode 22, the first separator 25, the positive electrode 26, and the second separator 29 is not limited thereto.

In FIG. 2, the negative electrode uncoated tab 24 is formed on the left side of the negative electrode 22 (X2 direction in FIG. 2), and the positive electrode uncoated tab 28 is formed on the right side of the positive electrode 26 (X1 direction in FIG. 2). However, the positions of the negative electrode uncoated tab 24 and the positive electrode uncoated tab 28 are not limited thereto.

The first inspection unit 200 may be spaced apart from the negative electrode 22 and disposed to face at least one of a first end 22a of the negative electrode 22 and a second end 22b of the negative electrode 22. The first inspection unit 200 may be disposed in various ways, for example, next to the negative electrode 22 (Y1 direction in FIG. 2), but is not limited thereto.

The first inspection unit 200 may be disposed to face a part where the negative electrode 22 is wound on the winding roll 100. That is, referring to FIG. 3, the first inspection unit 200 may be disposed to face a part where the negative electrode 22 is wound onto the winding roll 100 together with the first separator 25, the positive electrode 26, and the second separator 29.

Referring to FIG. 2, the first inspection unit 200 and the second inspection unit 300 may be disposed to be orthogonal to each other with respect to the winding roll 100, but are not limited thereto, and need not necessarily be orthogonal to each other.

The first inspection unit 200 may include a first photographing member 210 and a second photographing member 220. Here, the first photographing member 210 and the second photographing member 220 may be diverse and, for example, may be various cameras.

The first photographing member 210 may be disposed to face the first end 22a of the negative electrode 22 to photograph the negative electrode uncoated tab 24, and the second photographing member 220 may be disposed to face the second end 22b of the negative electrode 22 to photograph a gap between the negative electrode 22 and the first separator 25. A specific description thereof will be provided later.

The second inspection unit 300 may be spaced apart from the positive electrode 26 and disposed to face at least one of a first end 26a of the positive electrode 26 and a second end 26b of the positive electrode 26. The second inspection unit 300 may be disposed in various ways, for example, above the positive electrode 26 (Z2 direction in FIG. 2), but is not limited thereto.

The second inspection unit 300 may be disposed to face a part where the positive electrode 26 is wound on the winding roll 100. That is, referring to FIG. 3, the second inspection unit 300 may be disposed to face a part where the positive electrode 26 is wound onto the winding roll 100 together with the negative electrode 22, the first separator 25, and the second separator 29.

As described above, referring to FIG. 2, the second inspection unit 300 and the first inspection unit 200 may be disposed to be orthogonal to each other with respect to the winding roll 100, but are not limited thereto, and need not necessarily be orthogonal to each other.

The second inspection unit 300 may include a third photographing member 310 and a fourth photographing member 320. Here, the third photographing member 310 and the fourth photographing member 320 may be diverse and, for example, may be various cameras.

The third photographing member 310 may be disposed to face the first end 26a of the positive electrode 26 to photograph a gap between the positive electrode 26 and the second separator 29, and the fourth photographing member 320 may be disposed to face the second end 26b of the positive electrode 26 to photograph the positive electrode uncoated tab 28. A specific description thereof will be provided later.

The control unit 400 determines whether the electrode assembly 21 is defective based on the inspection result from at least one of the first inspection unit 200 and the second inspection unit 300. Here, defects in the electrode assembly 21 may include a case where the negative electrode 22 and the first separator 25 are not accurately aligned at a predetermined position and a meander occurs, a case where the positive electrode 26 and the second separator 29 are not accurately aligned at a predetermined position and a meander occurs, a case where the first separator 25 and the second separator 29 are not accurately aligned at a predetermined position and a meander occurs, a case where folds occur in the negative electrode uncoated tab 24, or a case where folds occur in the positive electrode uncoated tab 28.

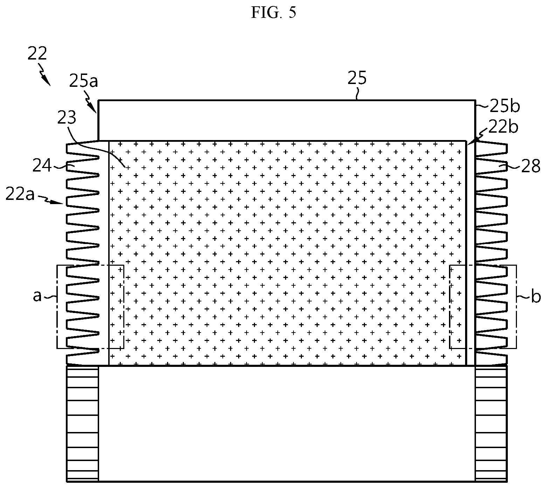

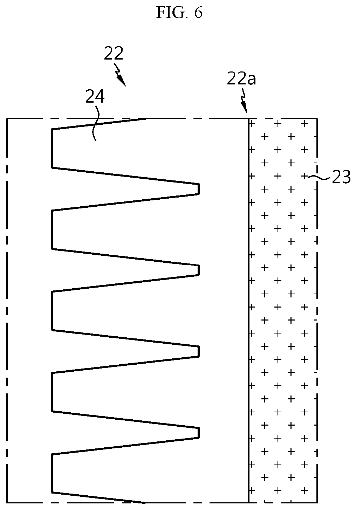

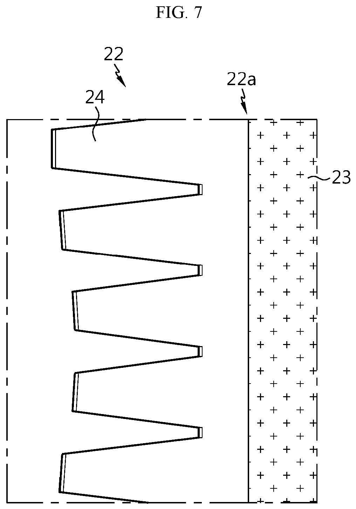

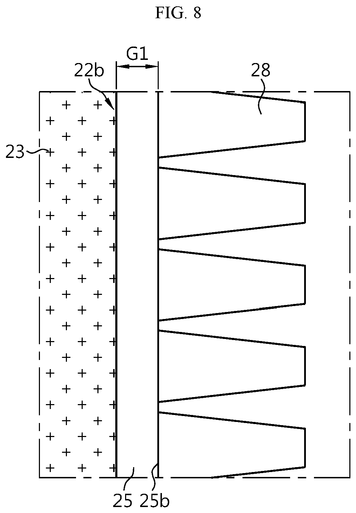

FIG. 5 is a view showing an image captured by a first inspection unit in an electrode assembly inspection device according to an embodiment of the present disclosure, FIG. 6 is an enlarged view of part a of FIG. 5, FIG. 7 is a view showing a case where folds occur in the negative electrode uncoated tab in FIG. 6, and FIG. 8 is an enlarged view of part b of FIG. 5.

As described above, referring to FIG. 2, the first inspection unit 200 may include the first photographing member 210 and the second photographing member 220.

Here, the first photographing member 210 is disposed to face the first end 22a of the negative electrode 22 to photograph the negative electrode uncoated tab 24.

Referring to FIGS. 5 and 6, the negative electrode uncoated tab 24 may be formed at the first end 22a of the negative electrode 22. As described above, the negative electrode uncoated tab 24 is a part where the negative electrode active material 23 is not applied and may be used as an electrode tab by itself.

The first photographing member 210 (see FIG. 2) photographs the negative electrode uncoated tab 24, and the control unit 400 may determine whether the negative electrode uncoated tab 24 is folded based on the result captured by the first photographing member 210.

That is, when the negative electrode uncoated tab 24 captured by the first photographing member 210 is as shown in FIG. 6, the control unit 400 determines that the negative electrode uncoated tab 24 is normal, but when the negative electrode uncoated tab 24 captured by the first photographing member 210 is folded as shown in FIG. 7, the control unit 400 determines that the negative electrode uncoated tab 24 is defective.

Accordingly, the first photographing member 210 may inspect whether the negative electrode uncoated tab 24 is defective.

And, the second photographing member 220 (see FIG. 2) may be disposed to face the second end 22b of the negative electrode 22 to photograph a gap between the negative electrode 22 and the first separator 25.

Referring to FIGS. 5 and 8, an area where the negative electrode active material 23 is applied in the negative electrode 22 is located inside the first separator 25. As shown in FIG. 8, the control unit 400 determines whether a meander has occurred in the negative electrode 22 and the first separator 25 by comparing the width of the negative electrode 22 and the width of the first separator 25 through a video or image captured between the negative electrode active material 23 of the negative electrode 22 and the first separator 25, thereby determining whether they are defective.

That is, the overall width of the negative electrode 22 and the overall width of the first separator 25 may be compared, and it is possible to determine whether the alignment is misaligned through the gap G1 (see FIG. 8) between the second end 22b of the negative electrode 22 and the second end 25b of the first separator 25.

Here, in an embodiment, reference data for the overall width of the negative electrode 22 and the overall width of the first separator 25 are input in advance to the control unit 400, and it is possible to determine whether there is a defect by comparing the reference data and a video or image captured when the negative electrode 22 and the first separator 25 are wound.

Alternatively, the data regarding each width of the negative electrode 22 and the first separator 25 before being wound, which is photographed in real time, are stored in the control unit 400, and it is possible to determine whether there is a defect by comparing the stored data and a video or image captured when the negative electrode 22 and the first separator 25 are wound.

Accordingly, it is possible to inspect whether the negative electrode 22 and the first separator 25 are defective due to a meander.

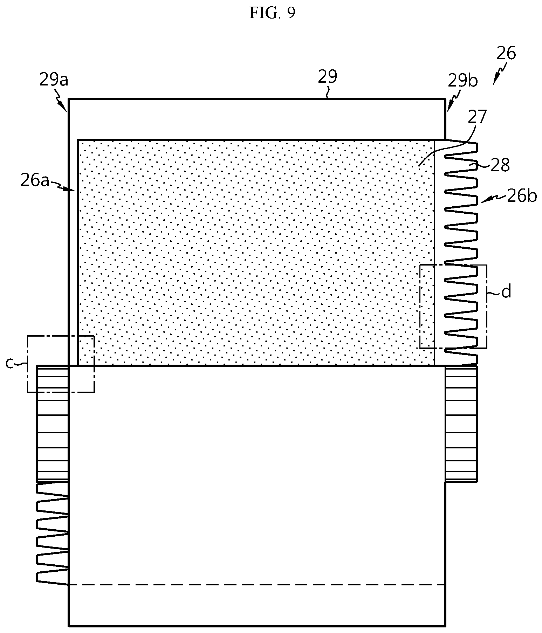

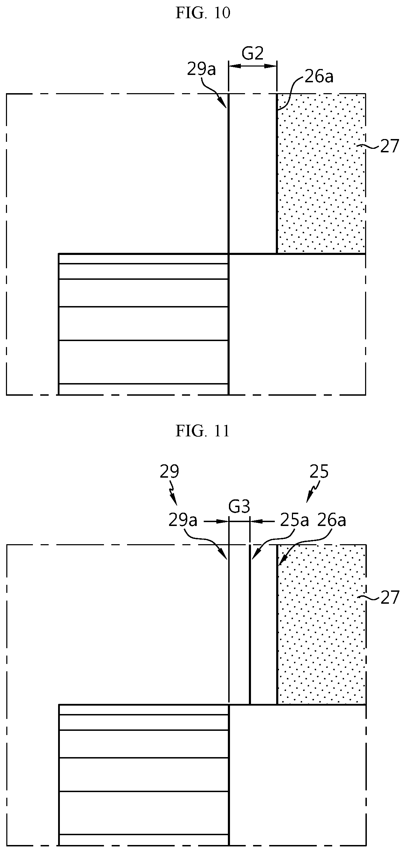

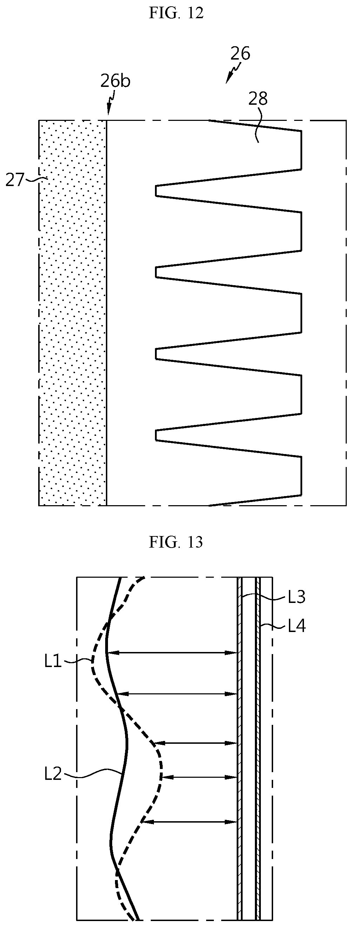

FIG. 9 is a view showing an image captured by a second inspection unit in an electrode assembly inspection device according to an embodiment of the present disclosure, FIG. 10 is an enlarged view of part c of FIG. 9, FIG. 11 is a view showing a case where a gap is created between the first separator and the second separator in FIG. 10, and FIG. 12 is an enlarged view of part d of FIG. 9.

As described above, referring to FIG. 2, the second inspection unit 300 may include the third photographing member 310 and the fourth photographing member 320.

Here, the third photographing member 310 (see FIG. 2) is disposed to face the first end 26a of the positive electrode 26 to photograph a gap between the positive electrode 26 and the second separator 29.

Referring to FIG. 2, the positive electrode 26 is located inside the first separator 25 and the second separator 29, and the positive electrode 26 is coated with the positive electrode active material 27. That is, referring to FIGS. 9 and 10, an area where the positive electrode active material 27 is applied in the positive electrode 26 is located inside the second separator 29. As shown in FIG. 10, the control unit 400 determines whether a meander has occurred in the positive electrode 26 and the second separator 29 by comparing the width of the positive electrode 26 and the width of the second separator 29 through a video or image captured between the positive electrode active material 27 of the positive electrode 26 and the second separator 29, thereby determining whether they are defective.

That is, the overall width of the positive electrode 26 and the overall width of the second separator 29 may be compared, and it is possible to determine whether the alignment is misaligned through the gap G2 (see FIG. 10) between the first end 26a of the positive electrode 26 and the first end 29a of the second separator 29.

Here, in an embodiment, reference data for the overall width of the positive electrode 26 and the overall width of the second separator 29 are input in advance to the control unit 400, and it is possible to determine whether there is a defect by comparing the reference data and a video or image captured when the positive electrode 26 and the second separator 29 are wound.

Alternatively, the data regarding each width of the positive electrode 26 and the second separator 29 before being wound, which is photographed in real time, are stored in the control unit 400, and it is possible to determine whether there is a defect by comparing the stored data and a video or image captured when the positive electrode 26 and the second separator 29 are wound.

Accordingly, it is possible to inspect whether the positive electrode 26 and the second separator 29 are defective due to a meander.

Meanwhile, referring to FIG. 11, the third photographing member 310 may photograph the gap G3 between the first separator 25 and the second separator 29. The first separator 25 and the second separator 29 may be formed to have the same width, in which case, for example, the first end 25a of the first separator 25 and the first end 29a of the second separator 29 should overlap to match, but when a meander occurs, the first end 25a of the first separator 25 and the first end 29a of the second separator 29 do not match, and a gap G3 occurs, as shown in FIG. 11.

In this way, if the first end 25a of the first separator 25 and the first end 29a of the second separator 29 do not match according to the video or image captured by the third photographing member 310, the control unit 400 may determine that it is defective.

Referring to FIGS. 9 and 12, the positive electrode uncoated tab 28 may be formed at the second end 26b of the positive electrode 26. As described above, the positive electrode uncoated tab 28 is a part where the positive electrode active material 27 is not applied and may be used as an electrode tab by itself.

The fourth photographing member 320 (see FIG. 2) is disposed to face the second end 26b of the positive electrode 26 to photograph the positive electrode uncoated tab 28, and the control unit 400 may determine whether the positive electrode uncoated tab 28 is folded based on the result captured by the fourth photographing member 320.

That is, when the positive electrode uncoated tab 28 captured by the fourth photographing member 320 is as shown in FIG. 12, the control unit 400 determines that the positive electrode uncoated tab 28 is normal. However, when the positive electrode uncoated tab 28 captured by the fourth photographing member 320 is folded, the control unit 400 determines that the positive electrode uncoated tab 28 is defective. Here, the folds of the positive electrode uncoated tab 28 may be similar to the folds of the negative electrode uncoated tab 24 of FIG. 7.

Accordingly, the fourth photographing member 320 may inspect whether the positive electrode uncoated tab 28 is defective.

FIGS. 13 and 14 are views for describing, respectively, the calculation of whether a negative electrode or a positive electrode is meandering in the opposite direction based on the results of inspecting whether the negative electrode or the positive electrode is meandering in one direction by an electrode assembly inspection device according to an embodiment of the present disclosure.

The control unit 400 (see FIG. 2) may calculate whether the negative electrode or the positive electrode is meandering in the opposite direction based on the result of inspecting whether the negative electrode or the positive electrode is meandering in one direction. Here, the negative electrode active material is coated on both sides of the negative electrode, and the positive electrode active material is coated on both sides of the positive electrode.

And, for example, a positive electrode surface inspector (not shown) may measure positive electrode measurement data. The positive electrode measurement data is the measurement data of the widthwise length of the positive electrode active material coated on both sides of the positive electrode measured before winding. And, the control unit 400 stores the positive electrode measurement data.

Referring to FIG. 13, a coating line L1 on the rear side of the virtual positive electrode may be derived by calculating the positive electrode measurement data described above. And, a coating line L2 on the front side of the virtual positive electrode may be derived by calculating a meandering gap of the tab portion of the positive electrode.

Here, the meandering gap of the tab portion of the positive electrode may be derived by calculating, for example, the absolute value of the widthwise length of the positive electrode active material coated on one side of both sides plus the positive electrode gap plus the first separator width plus the alignment deviation between the separators minus the negative electrode gap, or the absolute value of the widthwise length of the positive electrode active material coated on the other side of both sides plus the positive electrode gap plus the first separator width plus the alignment deviation between the separators minus the negative electrode gap, whichever is smaller. However, this is one example.

Referring to FIG. 13, the control unit (see FIG. 2) may derive the meandering gap through a coating line L1 on the rear side of the virtual positive electrode, a coating line L2 on the front side of the virtual positive electrode, and a slitting line L3 on the front side of the negative electrode. And, L4 in FIG. 13 is a line of the first separator 25.

Meanwhile, for example, a negative electrode surface inspector (not shown) may measure negative electrode measurement data. The negative electrode measurement data is the measurement data of the widthwise length of the negative electrode active material coated on both sides of the negative electrode measured before winding. And, the control unit 400 stores the negative electrode measurement data.

Referring to FIG. 14, a coating line L5 on the front side of the virtual negative electrode may be derived by calculating the negative electrode measurement data described above. And, a coating line L6 on the rear side of the virtual negative electrode may be derived by calculating a meandering gap of the tab portion of the negative electrode.

Here, the meandering gap of the tab portion of the negative electrode may be derived by calculating, for example, the absolute value of the widthwise length of the negative electrode active material coated on one side of both sides plus the negative electrode gap plus the first separator width plus the alignment deviation between the separators minus the positive electrode gap, or the absolute value of the widthwise length of the negative electrode active material coated on the other side of both sides plus the negative electrode gap plus the first separator width plus the alignment deviation between the separators minus the positive electrode gap, whichever is smaller. However, this is one example.

Referring to FIG. 14, the control unit 400 (see FIG. 2) may derive the meandering gap through a coating line L5 on the front side of the virtual negative electrode, a coating line L6 on the rear side of the virtual negative electrode, and a slitting line L7 on the rear side of the positive electrode. And, L8 in FIG. 14 is a line of the second separator 29.

Accordingly, there is an effect of inspecting the meander due to the widthwise tolerance of the coating portion of the electrode through calculation between inspection data before winding and inspection data during winding in an area that cannot be inspected in the winding process of the electrode assembly.

FIG. 15 is a view schematically showing the configuration of a battery pack including a battery cell including an electrode assembly produced using an electrode assembly inspection device according to each embodiment of the present disclosure.

Referring to FIG. 15, a battery pack 30 according to an embodiment of the present disclosure may include one or more battery cells 20. Here, the battery cell 20 may be a cylindrical battery cell, and the battery cell 20 includes the electrode assembly 21 produced using the electrode assembly inspection device 10 according to each embodiment of the present disclosure as described above.

In addition, the battery pack 30 may further include a pack housing 31 for accommodating the battery cell 20, various devices for controlling charge/discharge of the battery cell 20, such as a BMS, a current sensor, a fuse, and the like.

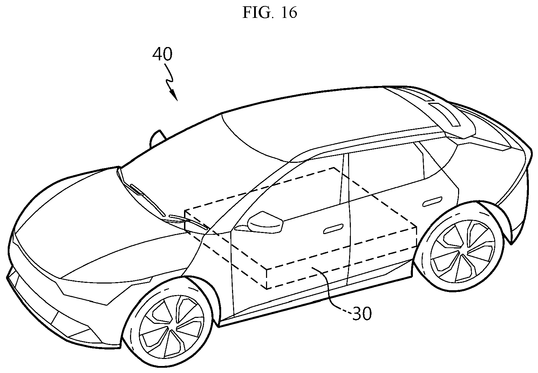

FIG. 16 is a view for describing a vehicle including the battery pack of FIG. 15.

Referring to FIG. 16, a vehicle 40 according to an embodiment of the present disclosure may include one or more battery cells 20 or battery packs 30. The battery cell 20 includes the electrode assembly 21 produced using the electrode assembly inspection device 10 according to each embodiment of the present disclosure as described above. And, the battery pack 30 may include one or more battery cells 20 as described above.

Here, the vehicle 40 includes various vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to an electrode assembly inspection device, a battery cell including an electrode assembly produced using the same, and a battery pack and a vehicle including the battery cell, and is particularly applicable to industries related to secondary batteries.

## Claims

1. An electrode assembly inspection device, which is a device for inspecting an electrode assembly of a battery cell, comprising:
a winding roll where a negative electrode, a first separator, a positive electrode, and a second separator are wound;
a first inspection unit spaced apart from the negative electrode and disposed to face at least one of a first end of the negative electrode and a second end of the negative electrode;
a second inspection unit spaced apart from the positive electrode and disposed to face at least one of a first end of the positive electrode and a second end of the positive electrode; and
a control unit determining whether the electrode assembly is defective based on the inspection result from at least one of the first inspection unit and the second inspection unit.

2. The electrode assembly inspection device according to claim 1,
wherein the first inspection unit is disposed next to the negative electrode, and the second inspection unit is disposed above the positive electrode.

3. The electrode assembly inspection device according to claim 2,
wherein the first inspection unit and the second inspection unit are disposed to be orthogonal to each other with respect to the winding roll.

4. The electrode assembly inspection device according to claim 1,
wherein the first inspection unit is disposed to face a part where the negative electrode is wound on the winding roll.

5. The electrode assembly inspection device according to claim 1,
wherein the second inspection unit is disposed to face a part where the positive electrode is wound on the winding roll.

6. The electrode assembly inspection device according to claim 1,
wherein a negative electrode uncoated tab is formed at the first end of the negative electrode, and
the first inspection unit comprises a first photographing member disposed to face the first end of the negative electrode to photograph the negative electrode uncoated tab.

7. The electrode assembly inspection device according to claim 6,
wherein the control unit determines whether the negative electrode uncoated tab is folded based on the result captured by the first photographing member.

8. The electrode assembly inspection device according to claim 1,
wherein the first inspection unit comprises a second photographing member disposed to face the second end of the negative electrode to photograph a gap between the negative electrode and the first separator.

9. The electrode assembly inspection device according to claim 1,
wherein the second inspection unit comprises a third photographing member disposed to face the first end of the positive electrode to photograph a gap between the positive electrode and the second separator.

10. The electrode assembly inspection device according to claim 9,
wherein the third photographing member photographs a gap between the first separator and the second separator.

11. The electrode assembly inspection device according to claim 9,
wherein the positive electrode is located inside the first separator and the second separator, and the first end of the positive electrode is coated with a positive electrode active material.

12. The electrode assembly inspection device according to claim 1,
wherein a positive electrode uncoated tab is formed at the second end of the positive electrode, and
the second inspection unit comprises a fourth photographing member disposed to face the second end of the positive electrode to photograph the positive electrode uncoated tab.

13. The electrode assembly inspection device according to claim 12,
wherein the control unit determines whether the positive electrode uncoated tab is folded based on the result captured by the fourth photographing member.

14. The electrode assembly inspection device according to claim 1,
wherein a negative electrode active material is coated on both sides of the negative electrode and a positive electrode active material is coated on both sides of the positive electrode, and
the control unit calculates whether the negative electrode or the positive electrode is meandering in the opposite direction based on the result of inspecting whether the negative electrode or the positive electrode is meandering in one direction.

15. The electrode assembly inspection device according to claim 14,
wherein the control unit stores positive electrode measurement data of the widthwise length of the positive electrode active material coated on both sides of the positive electrode measured before winding, derives a coating line on the rear side of the virtual positive electrode by calculating the positive electrode measurement data, derives a coating line on the front side of the virtual positive electrode by calculating a meandering gap of the tab portion of the positive electrode, and derives a meandering gap through the coating line on the rear side of the virtual positive electrode, the coating line on the front side of the virtual positive electrode and the end line on the front side of the negative electrode.

16. The electrode assembly inspection device according to claim 14,
wherein the control unit stores negative electrode measurement data of the widthwise length of the negative electrode active material coated on both sides of the negative electrode measured before winding, derives a coating line on the front side of the virtual negative electrode by calculating the negative electrode measurement data, derives a coating line on the rear side of the virtual negative electrode by calculating a meandering gap of the tab portion of the negative electrode, and derives a meandering gap through the coating line on the front side of the virtual negative electrode, the coating line on the rear side of the virtual negative electrode and the end line on the rear side of the positive electrode.

17. A battery cell including an electrode assembly produced using an electrode assembly inspection device according to any one of claims 1 to 16.

18. A battery pack comprising at least one battery cell according to claim 17.

19. A vehicle comprising at least one battery cell according to claim 17.
